# EUROPEAN PATENT SPECIFICATION

(11) **EP 1 246 438 B1**
(45) Date of publication and mention of the grant of the patent: **28.09.2005**
(21) Application number: 01107605.6
(22) Date of filing: 27.03.2001
(51) Int. Cl.: H04M 3/493, H04M 3/44, H04M 1/27

(54) **Database maintenance method and system for use in a communication network**
Methode und System zur Verwaltung einer Datenbank in einem Kommunikationsnetz
Procédé et système de maintenance d'une base de données dans un système de communication

(43) Date of publication of application: 02.10.2002
(73) Proprietor: Nokia Corporation, 02150 Espoo (FI)
(72) Inventor: Boda, Peter, 00200 Helsinki (FI)
(74) Representative: Becker Kurig Straus

(56) References cited:
- US-A- 5 835 570
- US-A- 6 018 568
- US-A- 6 049 594
- US-A- 6 154 526
- US-A- 6 167 117

## Description

The invention relates to communication networks having a database that relates contact information to names, e.g. name dialling systems. It also relates generally to voice dialling systems using spoken names to enter the destination of the call, and to voice dialling systems using users' personal name directories. In particular, the invention relates to a method and system for maintaining a contact database that is adapted to maintain personal name directories of a voice dialling system, and to a computer program and computer program product adapted to carry out said maintenance method, to a terminal device and a server in which said maintenance method is carried out.

Personal databases can be used in dialling systems (separately or as an addition to e.g. corporate databases), or in other parts of the communication network. The databases of private intelligent communication networks and dialling systems, especially of voice dialling systems require regular maintenance to ensure reliable and efficient operation. To simplify the use of communication networks, especially of private intelligent communication networks, and to enhance the comfort of the communication device user, the input of a communication destination can significantly be improved by a voice input instead of a number dialling operation. This is because people tend to easily forget contact information and in hands/eyes-busy situations, e.g. driving, voice dialling provides enhanced safety.

Voice dialling systems known in the art are described in the USP 5,924,070, USP 6,154,526,USP 5,917,891, USP 6049594, USP 5835570 and in USP 6018568.

The USP 5,924,070 describes a classic voice dialling system, and a method of its operation. The names are stored along with the telephone number in user personal databases.

The USP 6,154,526 describes a data acquisition and error correcting speech recognition system and a method of its operation, for the use in a voice dialling system. The system involves a dialogue between the user and the voice dialling system, wherein the system repeats the dialled telephone numbers. This system is able to add entries to the database automatically. It can be used in environments, where users cannot manipulate a keypad such as in-car or on-motorbike applications.

The USP 5,917,891 describes a voice-dialling system using an adaptive model of calling behaviour. The adaptive calling behaviour model increases the performance with the available behaviour data of the users. If the system can detect that the user keeps calling only two certain numbers each Friday afternoon, the system increases the performance by only distinguishing between the names related to these two numbers (in other words part of the language model used for the speech recognition process is modified in order to emphasise the increased likelihood of two certain numbers). The main drawback of this system is that rarely used telephone numbers tend to show no use behaviour patterns.

The document USP 6049594 discloses a technique for creating, training, and using a telecommunication network-based automatic voice-dialing system. The technique comprises the automatic determination, by a network element, of likely called parties for a given customer. This determination is based on records of network usage by the customer. Names of the likely called parties are determined through the use of, e.g., a conventional reverse telephone directory database.

The document USP 5835570 discloses a voice-directed telephone dialing method and system for automatically accessing a directory assistance service for obtaining a telephone number for a spoken voice label that is not contained within a subscriber's personal telephone list. Upon retrieval of the desired telephone number, the subscriber is prompted for adding the new number to the personal list.

The document USP 6018568 discloses a voice dialing system that includes a voice-dialing device and a terminal. In USP 6018568 the voice-dialing device is coupled to the terminal through a network and the voice dialing device stores a telephone directory that includes text-based voice entries. The terminal is coupled to the voice-dialing device through a network and sends text-based telephone directory information to the voice-dialing device. The voice-dialing device modifies the telephone directory based on the text-based telephone directory information received. At a later time, a subscriber calls and the voice dialing device selects an entry from the telephone directory based on a name spoken by the subscriber. The voice dialing device dials a telephone number retrieved from the selected entry of the telephone directory and connects the subscriber with a called party.

All these systems have in common that the system performance is related to the number of name entries in the personal database. To keep the system performance high, the database has to be maintained, new entries have to be made, and even more important, useless entries have to be deleted. The maintenance of the databases has to be executed by a network administrator, or the user himself. Users tend to forget the maintenance task and thus the recognition performance of the dialler system decreases. Further, the user tends to keep rarely used name entries, because the user easily forgets these rarely used numbers and as a consequence, the size of the database increases thus decreasing recognition performance. Additionally, all these Systems are limited to telephone networks.

To increase the performance of a contact database for name dialling it is important to maintain or update the database periodically. For example, to keep the performance of a voice dialling process, there is a need for a database maintenance system that is capable of updating the database of the voice dialling system.

One object of the invention is to provide a system and a method to maintain databases in communication networks and dialling systems to increase their performance. Further, a computer program and computer program product for carrying out said method, as well as a terminal device and a server should be provided.

Another object of the invention is to simplify the maintenance of the personal name directories in communication networks or name dialling systems.

This is achieved according to one aspect of the invention, by a method for maintaining a database in a communication network according to claim 1. It comprises the steps of determining the contact information which is used to establish a connection, generating usage statistics of said contact information, providing said usage statistics of said contact information to a terminal device, and offering maintenance operations of said contact database to a user based on this contact information and said usage statistics.

By storing the contact information called, the retransfer of this contact information to the same or another terminal device can be executed any time later. By collecting data associated to used contact information, the system can show the user to how important a maintenance operation is. The associated data can be data for statistics, statistics, temporal rules other information from the contact database like organisation structure etc. By transferring the contact information to a terminal device, the user can decide by himself/herself if he/she wants to maintain his/her personal telephone directory in the contact database.

Preferably, the step of maintaining comprises an addition of data, advantageously, the step of maintaining comprises a deletion of data, and conveniently, the step of maintaining comprises a modification of data, or a reminding of said user. Especially the reminding of the user is an extraordinary indirect way to maintain a contact database, because the entries in the contact database are not directly changed, but the user was encouraged to use the database. So the system tries to change the behaviour of the user to optimise the overall contact performance, instead of trying to adapt to an arbitrary behaviour of the user.

Preferably, the contact information is a telephone number. This is especially useful for name and voice dialling system in connection with PBX, or for voice/name dialling systems in mobile terminal devices. It is very useful for mobile terminal devices in connection with voice generated short messages too, so that a user can generate, address and post a message like SMS just by voice.

Advantageously, the contact information is an e-mail or internet address. With the help of this contact database information system the user can maintain in a first stage a name dialling system. This name dialling system is very useful, if certain internet sites can easily be chosen even though the desired company, product or like can be found under difficult memorable internet addresses. It is to be understood that internet addresses can also be single internet sites. In a second stage these internet addresses may be re-selected by a voice enabled input. Preferably, as in the case of phone applications, wherein the user has to pick up a telephone receiver, the user may have to press a key to start the voice enabled internet address input. This can be useful to prevent the system from auto surfing if the system coincidentally receives internet addresses, spoken, e.g., to another person on a telephone.

Conveniently, the contact information is a WAP access point. By using WAP, SMS or other mobile phone usable contact information, the limited storage space especially in mobile terminal devices can be used in an optimised way. It is to be understood that the present invention is not limited to the mentioned embodiments of the present GSM or other communication standards, but is also applicable to any communication network.

Preferably, the method for maintaining a contact database further comprises the option of using name dialling operation. In this case, the contact information is transferred to the terminal device if the name dialling option has not been used to dial the contact information. By transferring dialled contact information from the communication network to the database maintenance system, the system can, by referring to the database of the name dialling system, create a list of those contact information dialled without the use of the name dialling system. This enables the database maintenance system to transfer the contact information to a user terminal for offering to add the contact information to the personal user directory. This also enables the database maintenance system to remind the user that he/she already has entered a name and a contact information in the voice dialling system, to encourage the user, in case that particular contact information is used rarely, to use the voice dialling system to dial the contact information.

Preferably, the contacted contact information are contacted to by voice dialling. By using voice dialling the user can dial without using his/her hands. Voice dialling can be executed by voice-enabled name dialling, i.e. when a name is uttered by the user and recognised by the system, and by voice-enabled number/letter dialling, i.e. when the full contact information is uttered by the user and recognised by the system. The voice dialling system includes that both the voice dialling system and the database system may be set to a passive state, as e.g. a handicapped person who can not use the voice dialling system for sending e.g. a FAX, and surely doesn't want to be periodically reminded to use it. It is to be understood that the expression "voice" is synonymously used for every sound directly or indirectly generated from a user. This sound is not limited to sounds generated by the vocal cords of the user. The sound may be generated by whistling, clapping or even knocking or the like without the direct use of the vocal cords.

Advantageously, the method for maintaining a database in a communication network further comprises the step of generating statistics comprising the number of calls made to a specific contact information during a predetermined interval. By generating statistics of how often a certain contact information is contacted, the system can decide on whether the contact information should be offered to the user to be added to the user's personal directory. Additionally, in the case of a voice dialling system, the maintenance system may detect the probability that the name, to be associated to the offered contact information, that may be entered is similar in phonological sense from pronunciation point of view to other names previously entered and contained in the personal directory of the user. In response to the user entry, the system may even offer a similar, but phonetically distant name so that the user only has to answer by yes/no in order to enter the name into her/his personal directory. Very similar names affect the accuracy of recognition process, because the more similar names are present in a name directory the more frequently misrecognition occurs.

Advantageously, the offer to add a contact information to a database is transferred via a message. By transferring the offer to maintain the personal directory via a message system, the user can be reminded to maintain the user directory even if the user has actually no access to the terminal device he/she uses for telephony, or if the telephone device is not able to perform the steps required for the execution of the maintenance. The message can be transferred via electronic mail (e-mail), short message system (SMS), wireless application protocol (WAP), computer generated voice message, or any other suitable message system. The message may even be a computer generated voice message, to enable blind persons to maintain their personal contact database, especially because blind persons benefit from a voice dialling system, as blind persons can not easily dial or note contact information. The message can even be a reply postcard enclosed to a telephone bill.

Preferably, the user transfers a maintenance order via a message system and advantageously, the method for maintaining a database further comprises the step of automatically executing a maintenance order. If the voice recognition system is smart enough, it may automatically recognise the name uttered by the user, search for the name related to this contact information in other user directories or in public directory assistance database if access is allowed and finally produce a textual form of the uttered name and a corresponding contact information ready for storage in the user's personal directory. An intelligent voice recognition system may even extract the name from a voice sequence at the beginning of a call, e.g. search for the first name following a salutation.

Preferably, the statistics is used for offering a deletion of said transferred contact information and said related name from said directory. By offering the deletion of names from the directory, the system can provide full maintenance to the database. In voice dialling systems, the system may even offer to change names in the directory to improve the overall performance of the voice dialling system in case that a misrecognition and subsequent cancellation by the user occurs due to phonologically close pronunciation of names. Less frequently used voice contacted contact information such as a telephone number or an e-mail address can be offered for deletion to increase the overall performance of the voice dialling system. The invention relates further to a method of reminding users, based on their calling pattern to maintain their personal name directories in order to increase the overall system performance.

Advantageously, the method for maintaining a database, further comprises the step of automatically maintaining the contact database according to said statistics. This feature can help to automatically maintain names/contact information and even personal directories. For example, rarely used contact information can be deleted after 1.5 years, often used contact information can be deleted after 2 years, and personal directories can be deleted after 3 years. This would enable the system to keep contact information for more than one year, prior to automatic deletion, so that contact information for use in seasonal requirements will not be deleted. Additionally, if a user quits the system, her/his personal directory is deleted after 3 years, even if an administrator forgot to delete the directory. With this feature it can be prevented, that the system is crowded by old invalid personal directories.

According to another aspect of the present invention, a computer program is provided, by which implementation of a method for maintaining a database according to the present invention can be executed. By using a computer program for the execution of the method for the maintenance of a database, the method can easily be implemented in computer based communication networks, such as ISDN (Integrated Systems Digital Network) or the like where the user is identified by means of an available calling number. The method according to the invention can easily be implemented in computer based voice dialling systems, too.

According to another aspect of the invention, a computer program product is provided having a storage medium which contains a program for the execution of a database maintenance method.

According to yet another aspect of the invention a terminal device comprising a contact database. Said terminal further comprises means for determining the contact information which is used to establish a connection, means for storing a used contact information, means for generating usage statistics of said contact information, means for providing said usage statistics of said contact information to a user, means for offering maintenance operations of said contact database to a user based on said contact information and said usage statistics.

Preferably, the terminal device further comprises or is arranged to be connected to means for automatically generating messages and means for automatically posting messages to another terminal device.

Advantageously, the terminal device, further comprises voice recognition means. Conveniently, the terminal device is a mobile phone, and preferably, the terminal device is connected to, is incorporated in, or comprises a computer device. By maintaining a name dialling database in a terminal, the system prevents the database from requiring more storage space than necessary.

According to another aspect of the present invention a server is provided in a network, capable of executing the method of claims 1 to 15 to maintain a contact database, that comprises means for determining the contact information which is used to establish a connection, means for generating usage statistics of said contact information, and means for providing said usage statistics of said contact information to a terminal device for offering maintenance operations of said contact database to a user based on said contact information and said usage statistics.

Preferably, the server further comprises voice recognition means and advantageously, the server further comprises a name dialling system. With the server comprising voice recognition means, and a name dialling system, the server can execute all the steps of the maintenance method according to the present invention.

According to another aspect of the invention a contact database maintenance system in a network is offered, having at least one terminal device and at least one server, comprising means for determining the contact information which is used to establish a connection, generating usage statistics of said contact information, providing said usage statistics of said contact information to a terminal device, and means for offering maintenance operations of said contact database to a user (40) based on said contact information and said usage statistics.

By transferring data from a communication network to a terminal device, the user can be reminded to maintain his/her personal directory. He/She can be asked in the message to enter a name to add with the contact information into the database, or to cancel the operation. The database maintenance system can operatively be integrated in other computing devices in the communication network. The invention is not limited to communication networks, but can be used in other networks, e.g., telephone networks, local area networks, SMS, WAP or other general communication networks. It has to be appreciated that the terminal device may be different from the terminal device used for the originating call. For example, the contact information can be transferred via e-mail to a user accessible terminal of the communication network. The transfer method can be electronic mail (e-mail), short message system (SMS), wireless application protocol (WAP), computer generated voice message, or any other suitable message method.

Preferably, in the database maintenance system the database is connected to a name dialling system. Both can be located in the communication network. Name dialling systems, especially with keyboards enable the user to enter a typed name instead of a number and require therefore a keyboard. Such name dialling systems can be used, e.g., if the telephone is implemented in a computer having a headset or the like. The name dialling system can be used to type in a product name for browsing to the homepage of a company fabricating this product instead of typing in some kind of http://www.#####.### or the like.

Advantageously, the database maintenance system can be used in a terminal device that comprises means for displaying a message on a terminal device. The message can comprise an offer for adding a displayed contact information and a related name entered by said terminal device to a directory in a database. The implementation of the system in a handset such as a cellular phone or a car-phone allows to use the relatively limited storage space to save the resources of the terminal device.

Advantageously, the database maintenance system maintains the database of a voice recognition system, e.g. for performing voice dialling with a name dialling system. By maintaining/updating the database of a voice dialling system, the system performance can be kept high, if new entries are made, and even more important, useless entries can be deleted. The performance of a voice recognition operation is roughly inversely proportional to the number of name entries in the database, that can be distinguished. Therefore the number of name entries has to be kept as low as possible.

Conveniently, the database maintenance system comprises a voice pattern recognition system. A voice pattern recognition system enables the system to identify a specific speaker. This enables a user to be identified by the system, even if the user is actually not using the terminal device related to him/her. This embodiment of the present invention may easily implemented, as the system already needs a powerful signal processing devices.

Preferably, the database maintenance system further comprises means to generate user call statistics in predetermined intervals comprising the number of calls made to a specific contact information. The specific contact information is either part of the personal directory or a called number dialled without the intervention of the voice dialling system.

By preparing user call statistics, the system can detect whether the personal name directory is up to date or requires maintenance. This enables the system to decide if a user should be urged to maintain/update his/her personal directory or not. It is an important feature of the invention, that the system does not inquire the user if no maintenance is necessary. The statistics has to be generated periodically, to keep the system maintained. The period can be time-dependent, such as day, week, month or year, and the statistics may be kept for longer periods. The period can also be related to the number of calls so that, e.g., the statistic is prepared after each hundredth call. The user call statistics may comprise an addition/deletion offer characteristics with a hysteresis, preventing continuous deletion/addition offers to a single contact information/name pair.

Advantageously, the database maintenance system further comprises means for deleting or adding a specific contact information and related data from or to said directory in a database. By deleting or adding or modifying name and contact information entries, the maintenance of the database can be executed.

Advantageously, the database maintenance system maintains the database of a speaker-dependent voice recognition system. By using a speaker-dependent voice recognition system for the voice dialling system in the network or the terminal device, the dialling performance can be increased significantly.

Preferably, the database maintenance system maintains the database of a speaker independent voice recognition system. By using a speaker-independent voice recognition system in the voice dialling system, the memory space and computing requirements of the system can be reduced. On the other hand, by using a speaker-dependent voice recognition system, the performance of the system can be improved. The best results can be expected from voice dialling systems using a combination of a speaker-dependent and speaker-independent voice recognition system.

Conveniently, the modules of the database maintenance system can be distributed between the terminal device and communication network. The distribution of the modules allows it, e.g., to install a speaker-independent voice recognition system in a terminal device, and a speaker-dependent voice recognition system in a server or in a communication network, or vice versa. The location of the voice recognition system, can be in a voice dialling server in the network, and the database with user specific information can be located in the network and can be used, e.g., for charging for the voice dialling service or the telephone service.

Advantageously, the means for voice dialling in the contact database maintenance system is distributed between the terminal device and a server. For example, a distributed voice recognition system can comprise a signal processing means in the terminal device, for preliminary processing of the voice waveform, and a secondary processing means for of recognising the already processed voice waveform for dialling means in a voice dialling server.

In the following, the invention will be described in detail by referring to the enclosed drawings in which
Figure 1 shows a flowchart of the telephone database maintenance method according to the present invention.
Figure 2 shows a block diagram of a telephone network according to the invention having a name dialling system,
Figure 3 shows a block diagram of a telephone network according to the invention with a voice-enabled name dialling system,
Figure 4 shows a block diagram of a telephone terminal device according to the invention with a voice-enabled name dialling system,
Figure 5 shows a possible message depicting how the user can be reminded to add names to frequently used telephone numbers,
Figure 6 shows a possible reply message depicting how the user can add names to frequently used telephone numbers,
Figure 7 shows a possible message depicting how the user can be reminded to delete names of rarely used telephone numbers, and
Figure 8 shows a possible reply message depicting how the user can delete names of rarely used telephone numbers, and
Figure 9 shows a block diagram of the maintenance system for contact databases in networks according to the present invention.

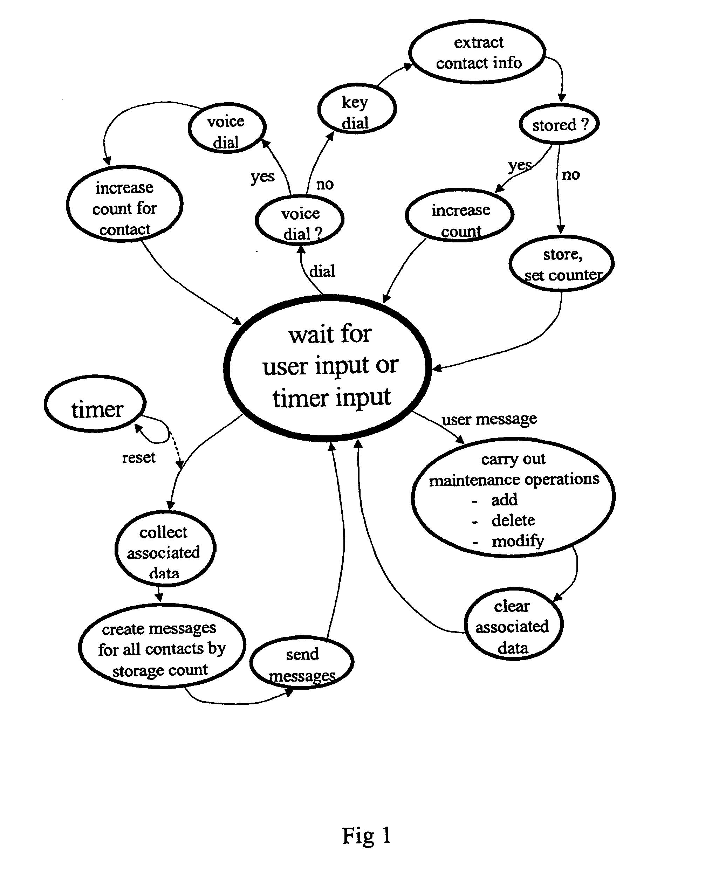

Figure 1 is an example of the telephone database maintenance method. In the first step a user (not shown) dials a telephone number. In the second step the system determines if voice dialling operation or a key dialling operation is to be executed. If the voice dialling option is chosen, the voice dialling operation is executed, statistics about the called number is maintained (not shown) and the process is terminated and the system waits for the next dialling event. In case that the key dialling is executed, the system stores the telephone number, and then checks if the telephone number has already been stored previously. If the telephone number is not stored yet, the telephone number is stored, a new count for the telephone number is established and set to 1 and the process is terminated and the system waits for the next dialling event. In case the telephone number is already stored, the system increases the telephone number count by 1. During the process, a preset timer defines time intervals at which the storage count is then compared to a predetermined number n. After each time interval the timer is re-set. If the number is lower than a predetermined number n, the process is terminated. If the storage count is greater than the number n, a message to the user is prepared to inform the user to maintain his telephone database, or to offer a maintenance operation. Then the stored telephone numbers which have a count exceeding the predetermined limit are deleted and the process is terminated.

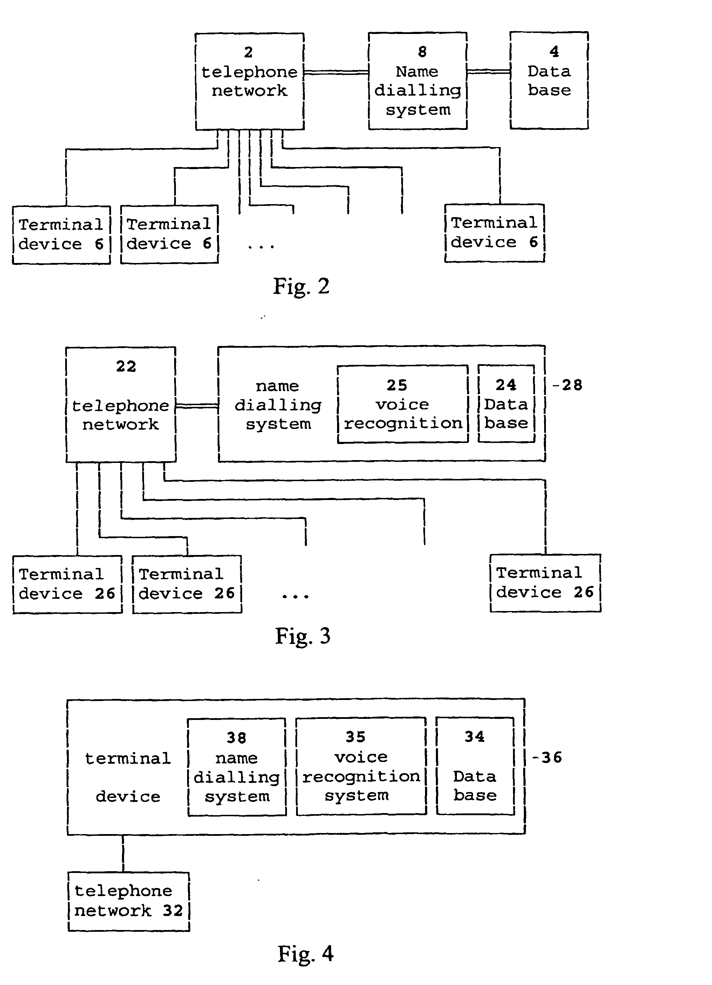

Fig. 2 shows a standard telephone network 2 with a single name dialling system 8. The telephone network 2 is connected to several terminal devices 6, and to said name dialling system 8 which in turn is connected to a database 4. The network can be a private branch exchange (PBX) connected to an exterior public telephone network, or a public telephone network with a service provider providing name dialling or a computer network based solution whereas the Voice over IP (VoIP) or similar technology is used. The main drawback of the system is that users tend to forget to maintain their private name directories, leading to a decrease in the name dialling performance, due to which the user may stop using the system. In order to provide the maximum performance the user has to be reminded to maintain his/her private name directory of the user periodically. In the state of the art, name dialling system can not access telephone numbers of calls made without the use of the name dialling system. Therefore, the system can not detect, if the user dials a number frequently, but is negligent to enter the name into the name directory. This may lead to a decreased use of the name dialling system, or the user stopping to use the system. In the proposed embodiment of the invention, the PBX or the exchange in the public telephone number collect the numbers the user called without the intervention of the name dialling system and provides to the database maintenance system for further investigation.

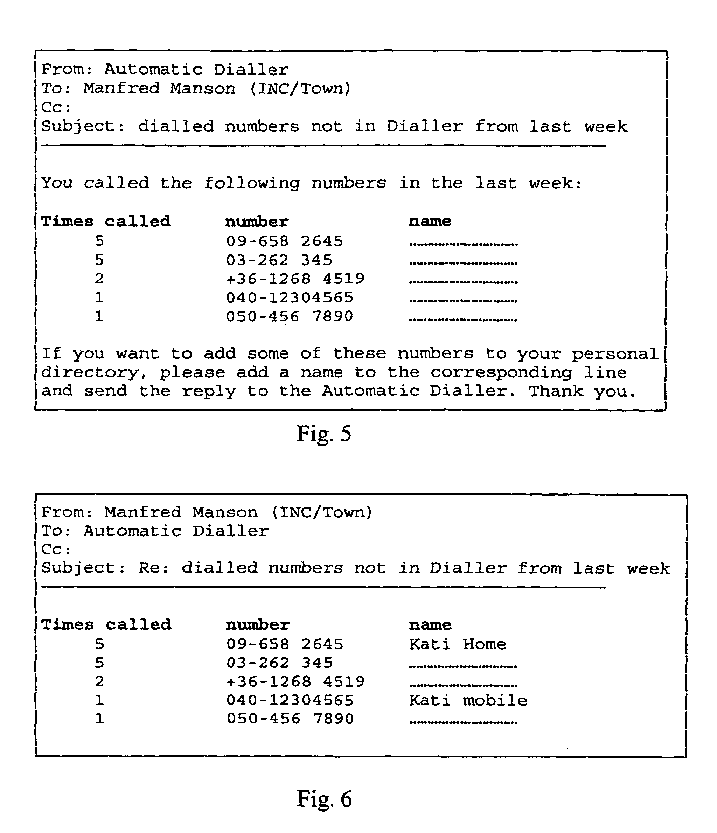

According to the invention the telephone network 2 transfers telephone numbers dialled without the name dialling system from one terminal device to the name dialling system 8. The name dialling system 8 compares the telephone numbers with the telephone numbers stored in the private directory of the user. If a telephone number is not in the directory, the name dialling system transfers a message as depicted in Fig. 5 to a user terminal device. In the case that a user already has entered a name related to a telephone number, but keeps dialling the number manually, the system can transfer a message to the user, to encourage him/her to use the voice dialling system for calling.

The next step to ease the dialling process is to perform a voice dialling process with a voice-enabled name dialling system as shown in Fig. 3. Voice dialling is an important feature for PBXs, computer-telephony integration applications, for handicapped persons, for car-phone, automotive applications, or for people in two-busy-hands situations, in the home environment, in industry, internet and anywhere where voice recognition introduces enhanced usability, ease-of-use, efficiency and/or safety. As seen in Fig. 3, the telephone network 22 is connected to a name dialling system 28. The name dialling system 28 comprises a voice recognition system 25 and a database 24 having personal name directories and other directories (not shown). As mentioned in relation to Fig. 2, the telephone network can comprise a connection to a public telephone network (not shown). The voice recognition system can be speaker-dependent (trainable) or speaker-independent. The use and the accurate performance of the voice dialling system is dependent on the number of names that can be used for voice dialling. If the number of names is low, users tend to forget the existence of the voice dialling system. If the number is high, the performance of the voice recognition system decreases, because its performance is in inverse proportion to the number of names to be distinguished. For maximum performance of the voice dialling system, the number of names in the personal name directory has to be optimised. This requires a periodically repeated maintenance of the personal directories in the database 24. The entries in the database 24 can be changed via the terminal devices 26, or via another system, such as the use of internet-based access (not shown). The access to the database 24 requires multiple steps at least for safety reasons, so a user tends to forget to maintain his/her personal directory. On the contrary, the database maintenance system reminds the user to maintain his/her directory. Additionally, the maintenance system can offer the user to add frequently used telephone numbers by adding a related name, or delete telephone numbers with a single mouse-click in an e-mail (this is only one way, however not an exclusive mode of the communication between the database maintenance system and the user). Additionally the system may store each name/telephone combination in a separate database, for automatically re-activating the telephone/name combination in the voice dialling system, if the telephone number was frequently dialled. Then the system can send a message to the user, to inform about the change in his/her personal name directory.

Fig. 4 shows a block diagram of a terminal device 36, having an integrated voice name dialling system 38, a speaker-independent and possibly also a speaker-dependent voice recognition system 35 and a database 34. The terminal device 36 is connected to a telephone network 32. The telephone network can be a PBX, a public telephone network or a cellular telephone network or a general computer network, e.g. Internet or LAN (Local Area Network) with Voice over IP or similar capabilities. The database maintenance system is operatively integrated in said terminal device 36. The database re-displays frequently keypad dialled telephone numbers on a display (not shown) to offer the addition to the personal name directory of the speaker independent voice recognition system 35 by entering a telephone number related name. The name may be entered by keypad for the speaker-independent recogniser or by voice for the speaker-dependent recogniser. The database of the terminal device may be used for different tasks, e.g. to save telephone numbers, phone fees or other related data. The display can be located spaced apart from the phone, even with another terminal device such as a computer connected to the internet. The display can be an optical, acoustical or other display. If the voice recognition system is capable of executing voice-enabled name dialling, the system may be capable of number dialling triggered by the recognition result of spoken name and voice communication operation too. With such a system, a completely keyless terminal device 36 can be produced, e.g., a pen-phone or such.

Advantageously, any combination of the architectures shown in Figures 2-4 and described above is applicable for the current invention.

State of the art voice name dialling applications use speaker-independent voice recognition technology. This means that the system administrator, or the user himself/herself can add names and telephone numbers by means of textual definitions. Just by typing in a name to the system directory, e.g. "Manfred home" = 09-1234567, the system forms a pronunciation model of the name which is used by the voice recognition means in the recognition phase. Adding a name to the directory and giving a corresponding number is straightforward via a web interface. Nevertheless it takes time to go to the necessary page, log in to the system with an identification step (for security reasons) and then type in the name(s) and telephone number(s).

Instead of using this long process the following process can be executed: over a predetermined period of time all dialled numbers which are called without the intervention of the voice dialler are collected in the telephone network 22. A data processing device receives a message containing the list of collected numbers from the telephone network. The collection and delivery of these numbers for any individual user is supported in current PBXs and exchanges of public fixed or mobile telephone networks or by gateways in case of VoIP implementations. The data processing device transfers the numbers of said list (Fig. 5) to the user. The user can access the message and type in the names referring to certain telephone numbers and reply to this message as depicted in Fig. 6 by sending back a completed list (the system-appended reply characters, e.g. >> can be omitted). The system will pick up those numbers from the list which have corresponding names and will append these pairs to the user's personal name directory. This phase can also be realised by a message which provides a link to the required web page which does not require any more user verification and offers the list of numbers to be associated with desired names.

Similar mechanism can be used for handset-based implementations. The basic idea is that the system can recognise the name automatically from the textual specification without any training when a name is stored in the memory with its number by means of speaker-independent recognition. According to the proposed method, if a number is called several times, the system can offer the option to add a desired name to it and to store it and thus it becomes part of the name directory. Similar mechanism is valid for the speaker-dependent case, but now the user utters the desired name and the system records it and trains a corresponding model for it to be used by the speaker-dependent recogniser. The specific number can be accessed by uttering the name instead of typing in the name or the number.

The method can be adapted such that the following parameters are adjustable by the user, e.g. via a web interface of the system: enabling or disabling the system messages, defining a delivery mode, defining the time period within which the numbers - called without the dialler - are collected, and the minimum frequency of calls within the period for a number to be included in the system message.

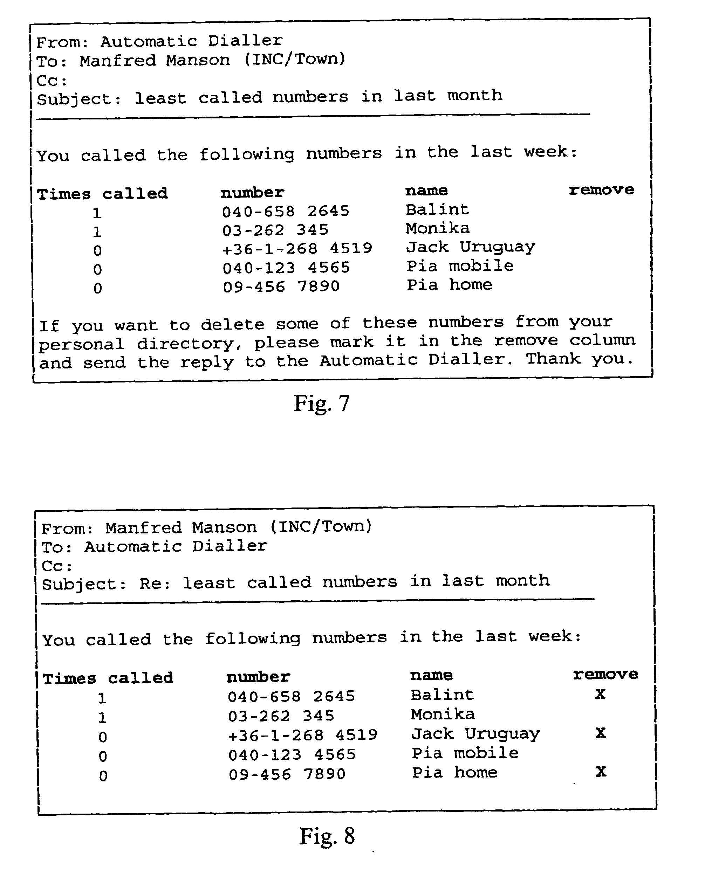

Instead of the tedious and lengthy method used in the state of the art for maintaining the personal name directory the following process is executed: A data processing device collects the statistics about the dialled names occurring in the personal name directory. The data processing device sends a message (Fig. 7) to the user after a predetermined time interval. The message comprises the least often voice dialled telephone numbers. The user can mark certain names and return this message as depicted in Fig. 8. The system will delete those numbers from the list and subsequently from the directory which are marked with the "remove" mark.

Similar mechanism can be used for handset-based implementations. The message can be an e-mail or a WAP, SMS, or any other suitable message. The e- mail would include a link to the user's personal name directory access page of the dialler system, with a readily offered choices to add or delete names without need of further user verification.

If the periods for the offer of adding and deleting are different, the system can prepare the delete statistics only on the basis of the names present in the personal name directory from the beginning of the period. With this, the system may prevent a deletion offer of a number being not present during the whole statistic period.

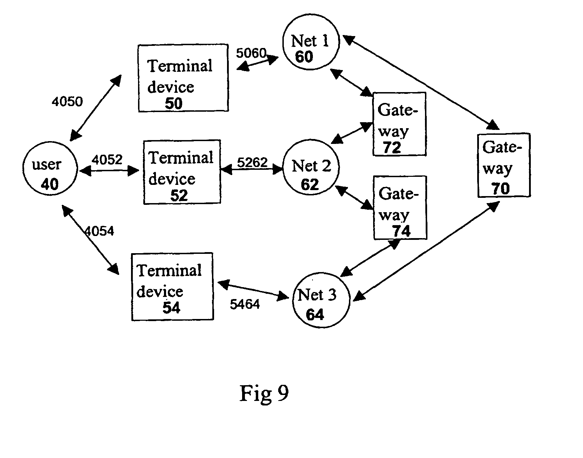

The previous figures just described telephone databases, Figure 9 shows a block diagram of the maintenance system for contact databases in networks according to the present invention. In the Block diagram a user 40 can access three different terminal devices 50, 52 and 53. In this example the terminal device 50 is a telephone/fax combination. The telephone/fax combination has a voice activated interface 4050 and is connected via ISDN 5060 to a telephone network 60. In the telephone fax/combination, the contact database is a voice or name dialling database for telephone numbers.
In this example the terminal device 52 is a WAP- and SMS-enabled mobile phone. The mobile phone has a touch screen interface 4052 and is wireless connection 5262 e.g. to a GSM (Global System for Mobile communication) or UMTS (Universal Mobile Telecommunication System) mobile communication network 62. The contact database is a WAP-access point database.
In this example the terminal device 54 is a multimedia enabled computer. The computer has a keyboard/mouse interface 4054 and is connected via connection 5464 e.g. by Ethernet, twisted pair, glass fibre, Bluetooth™ (a kind of a wireless LAN) or like to a digital data communication network 64 like a LAN or the internet. The contact database is an e-mail database.
The different communication networks are interconnected via Gateways 70, 72 and 73, by which the different networks can exchange data. The Gateways are necessary to compile the different transmission protocols used by the different networks. The Gateways 70, 72 and 74 ate connected to the respective networks 60, 62 and 64 via network connections. Each of the communication databases located in the terminal devices 50, 52, 54 or the respective networks 60, 62, 64 can post messages to the user 40. In the example, the terminal devices 50 and 52 post a message via internet to the terminal device 54, to inform the user 40 via e-mail that the respective contact databases require maintenance. In the normal case this would be the easiest way to maintain all three databases. The database maintenance systems of the networks 60, 62, 64 can co-operate to minimise the number of e-mails sent to the user 40. This may easily be achieved by synchronising the different timers of the database maintenance system in the different networks 60, 62, 64 or terminal devices 50, 52, 54. If the user 40 does not respond to the e-mails received on the terminal device 54, a next step in urging the user 40 to maintain his/her personal directories is to send a SMS to the Terminal device 52 to remind him/her to maintain his/her personal mailbox in the terminal device 54 or in the network 64. If the user 40 does not respond to this next step, the maintenance system may send a FAX vial the telephone network 60 to the telephone/FAX device 50, requesting maintenance for the databases. A last step in urging the user 40 to maintain her/his personal databases is to contact the user 40 or the terminal device 52 with a computer generated voice, reminding the user to maintain her/his personal contact databases. If the system can't reach the user 40 directly, the system may leave a message in a personal voice mailbox.

This application contains the description of implementations and embodiments of the present invention with the help of examples. It will be appreciated by a person skilled in the art that the present invention is not restricted to details of the embodiments presented above, and that the invention can also be implemented in another form without deviating from the characteristics of the invention. The embodiments presented above should be considered illustrative, but not restricting. Thus the possibilities of implementing and using the invention are only restricted by the enclosed claims. Consequently various options of implementing the invention as determined by the claims, including equivalent implementations, also belong to the scope of the invention.

## Claims

1. A method for maintaining a contact database (4, 24, 34), comprising the steps of:
- determining the contact information which is used to establish a connection;
- generating usage statistics of said contact information; **characterized by**
- providing said usage statistics of said contact information for offering maintenance operations of said contact database (4, 24, 34) to a user (40) of a terminal device (6, 26, 50, 52, 54) based on said contact information and said usage statistics.

2. Method according to claim 1, further comprising the step of automatically maintaining the contact database (4, 24, 34) according to said statistics.

3. Method according to claim 1 or 2, wherein the step of offering maintenance operations comprises an offering of an addition of data to said contact database (4, 24, 34).

4. Method according to claim 1, 2 or 3, wherein the step of offering maintenance operations comprises an offering of a deletion of data from said contact database (4, 24, 34).

5. Method according to anyone of the preceding claims, wherein the contact information is a telephone number.

6. Method according to anyone of the preceding claims, wherein the contact information is an e-mail or Internet address.

7. Method according to anyone of the preceding claims, wherein the contact information is a wireless application access point.

8. Method according to anyone of the preceding claims, wherein the contacted contact information is contacted to by name dialling.

9. Method according to anyone of the preceding claims, wherein the contacted contact information is contacted to by voice dialling.

10. Method according to anyone of the preceding claims, wherein said statistics of the contact information is generated in predetermined intervals.

11. Method according to anyone of the preceding claims, wherein the offer to maintain said contact database (4, 24, 34) is transferred via a message.

12. Method according to anyone of the preceding claims, further comprising the step of executing said maintenance order automatically.

13. Computer program code that causes a processor to execute a database maintenance operation in a communication network (2, 22, 32, 50, 52, 54), comprising program code means for performing all the steps of anyone of claims 1 to 12 when said program is run on a computer or a terminal device (6, 26, 50, 52, 54).

14. Computer program product comprising program code means stored on a computer readable medium for causing a processor to perform the method of anyone of claims 1 to 12 when said program product is run on a computer or terminal device (6, 26, 50, 52, 54).

15. Terminal device (36) comprising
- a contact database (34)
- means for determining the contact information which is used to establish a connection,
- means for storing used contact information;
- means for generating usage statistics of said contact information;**characterized by**
- means for providing said usage statistics of said contact information to a user (40) of said terminal device (36); and
- means for offering maintenance operations of said contact database (4, 24, 34) to said user (40) of said terminal device (36) based on said contact information and said usage statistics.

16. Terminal device (36) of claim 15, further comprising voice recognition means (35).

17. Terminal device (36) of claim 15 or claim 16, wherein said terminal device (6, 26, 50, 52, 54) is a mobile phone.

18. Terminal device (36) of anyone of claims 15 to 17, wherein the terminal device (6, 26, 50, 52, 54) is connected to, is incorporated in or comprises a computer device.

19. Server (28) for maintaining a contact database (24) in a network (2, 22, 32, 50, 52, 54) comprising means for
- determining the contact information which is used to establish a connection;
- generating usage statistics of said contact information; **characterized by**
- providing said usage statistics of said contact information for offering maintenance operations of said contact database (4, 24, 34) to a user (40) of a terminal device (6, 26, 50, 52, 54) based on said contact information and said usage statistics.

20. Server (28) of claim 19, further comprising voice recognition means (25).

21. Server (28) of claim 19 or claim 20, wherein the server (28) further comprises a name dialling system.

22. Contact database maintenance system in a network (2, 22, 32, 50, 52, 54), having at least one terminal device (6, 26, 50, 52, 54) and at least one server (28), comprising means for
- determining the contact information which is used to establish a connection;
- generating usage statistics of said contact information; **characterized by**
- providing said usage statistics of said contact information for offering maintenance operations of said contact database (4, 24, 34) to a user (40) of a terminal device (6, 26, 50, 52, 54) based on said contact information and said usage statistics.

23. Contact database maintenance system of claim 22, wherein said database (4) is connected to, or comprises a name dialling system (8).

24. Contact database maintenance system of claim 22 or claim 23, comprising means for displaying a transferred message in said terminal device (6, 26, 50, 52, 54).

25. Contact database maintenance system of anyone of claims 22 to 24, further comprising a voice recognition system (25).

26. Contact database maintenance system of anyone of claims 22 to 25, further comprising means to generate a user (40) call statistics comprising the number of contacts made to a specific contact information in predetermined intervals.

27. Contact database maintenance system of anyone of claims 22 to 26, further comprising means for adding or deleting a specific contact information and related data to or from a directory in said database (4, 34).

28. Contact database maintenance system of anyone of claims 25 to 27, wherein the voice recognition system (25) is speaker-dependent.

29. Contact database maintenance system of anyone of claims 25 to 27, wherein the voice recognition system (25) is speaker-independent.

30. Contact database maintenance system of anyone of claims 22 to 29, wherein modules of the system can be distributed between the terminal device (6, 26, 50, 52, 54) and the network (2, 22, 32, 50, 52, 54).

31. Contact database maintenance system of anyone of claims 25 to 30, wherein the means for voice dialling is distributed between the terminal device (6, 26, 50, 52, 54) and a server (28).

## Patentansprüche

1. Verfahren zum Pflegen einer Kontaktdatenbank (4, 24, 34), umfassend die Schritte von:
- Bestimmen der Kontaktinformation, die verwendet wird, eine Verbindung aufzubauen;
- Erzeugen einer Verwendungsstatistik der Kontaktinformation; **gekennzeichnet durch**
- Bereitstellen der Verwendungsstatistik der Kontaktinformation, um Pflegeoperationen der Kontaktdatenbank (4, 24, 34) einem Benutzer einer Terminalvorrichtung (6, 26, 50, 52, 54) basierend auf der Kontaktinformation und der Verwendungsstatistik anzubieten.

2. Verfahren gemäß Anspruch 1, ferner umfassend den Schritt von automatischem Pflegen der Kontaktdatenbank (4, 24, 34) entsprechend der Statistik.

3. Verfahren gemäß Anspruch 1 oder 2, wobei der Schritt von Anbieten von Pflegeoperationen ein Anbieten einer Zufügung von Daten zu der Kontaktdatenbank (4, 24, 34) umfasst.

4. Verfahren gemäß Anspruch 1, 2 oder 3, wobei der Schritt von Anbieten von Pflegeoperationen ein Anbieten einer Löschung von Daten von der Kontaktdatenbank (4, 24, 34) umfasst.

5. Verfahren gemäß einem der vorstehenden Ansprüche, wobei die Kontaktinformation eine Telefonnummer ist.

6. Verfahren gemäß einem der vorstehenden Ansprüche, wobei die Kontaktinformation eine E-Mail oder Internet-Adresse ist.

7. Verfahren gemäß einem der vorstehenden Ansprüche, wobei die Kontaktinformation ein drahtloser Anwendungs-Zugangspunkt ist.

8. Verfahren gemäß einem der vorstehenden Ansprüche, wobei die mit in Verbindung gesetzte Kontaktinformation durch Namenswahl mit in Verbindung gesetzt wird.

9. Verfahren gemäß einem der vorstehenden Ansprüche, wobei die mit in Verbindung gesetzte Kontaktinformation durch Sprachwahl mit in Verbindung gesetzt wird.

10. Verfahren gemäß einem der vorstehenden Ansprüche, wobei die Statistik der Kontaktinformation in vorbestimmten Intervallen erzeugt wird.

11. Verfahren gemäß einem der vorstehenden Ansprüche, wobei das Angebot, die Kontaktdatenbank (4, 24, 34) zu pflegen, mittels einer Nachricht übertragen wird.

12. Verfahren gemäß einem der vorstehenden Ansprüche, ferner umfassen den Schritt von automatischem Ausführen der Pflegeanweisung.

13. Computerprogrammcode, der einen Prozessor veranlasst, eine Datenbank-Pflegeoperation in einem Kommunikationsnetzwerk (2, 22, 32, 50, 52, 54) auszuführen, der Programmcodemittel zum Durchführen all der Schritte nach irgendeinem der Ansprüche 1 bis 12 umfasst, wenn das Programm auf einem Computer oder einer Terminalvorrichtung (6, 26, 50, 52, 54) läuft.

14. Computerprogrammprodukt, das Programmcodemittel umfasst, die auf einem Computerlesbaren Medium gespeichert sind, um einen Prozessor zu veranlassen, ein Verfahren nach irgendeinem der Ansprüche 1 bis 12 durchzuführen, wenn das Programmprodukt auf einem Computer oder einer Terminalvorrichtung (6, 26, 50, 52, 54) läuft.

15. Terminalvorrichtung (26), umfassend
- eine Kontaktdatenbank (34);
- Mittel zum Bestimmen der Kontaktinformation, die verwendet wird, um eine Verbindung aufzubauen;
- Mittel zum Speichern der verwendeten Kontaktinformation;
- Mittel zum Erzeugen einer Verwendungsstatistik der Kontaktinformation; **gekennzeichnet durch**
- Mittel zum Bereitstellen der Verwendungsstatistik der Kontaktinformation an einen Benutzer (40) der Terminalvorrichtung (36); und
- Mittel zum Anbieten von Pflegeoperationen der Kontaktdatenbank (4, 24, 34) dem Benutzer (40) der Terminalvorrichtung (36) basieren auf der Kontaktinformation und der Verwendungsstatistik.

16. Terminalvorrichtung (26) nach Anspruch 15, ferner umfassend Spracherkennungsmittel (35).

17. Terminalvorrichtung (26) nach Anspruch 15 oder Anspruch 16, wobei die Terminalvorrichtung (6, 26, 50, 52, 54) ein Mobiltelefon ist.

18. Terminalvorrichtung (26) nach irgendeinem der Ansprüche 15 bis 17, wobei die Terminalvorrichtung (6, 26, 50, 52, 54) verbunden ist mit, enthalten ist in oder eine Computervorrichtung umfasst.

19. Server (28) zum Pflegen einer Kontaktdatenbank (24) in einem Netzwerk (2, 22, 32, 50, 52, 54), umfassend die Mittel zum
- Bestimmen der Kontaktinformation, die verwendet wird, um eine Verbindung aufzubauen;
- Erzeugen einer Verwendungsstatistik der Kontaktinformation; **gekennzeichnet durch**
- Bereitstellen der Verwendungsstatistik der Kontaktinformation, um Pflegeoperationen der Kontaktdatenbank (4, 24, 34) einem Benutzer (40) einer Terminalvorrichtung (6, 26, 50, 52, 54) basierend auf der Kontaktinformation und der Verwendungsstatistik anzubieten.

20. Server nach Anspruch 19, ferner umfassend Spracherkennungsmittel (25).

21. Server nach Anspruch 19 oder Anspruch 20, wobei der Server (28) ferner ein Namenswahlsystem umfasst.

22. Kontaktdatenbank-Pflegesystem in einem Netzwerk (2, 22, 32, 50, 52, 54), das zumindest eine Terminalvorrichtung (6, 26, 50, 52, 54) und zumindest einen Server (28) aufweist, umfassend Mittel zum
- Bestimmen der Kontaktinformation, die verwendet wird, um eine Verbindung aufzubauen;
- Erzeugen einer Verwendungsstatistik der Kontaktinformation; **gekennzeichnet durch**
- Bereitstellen der Verwendungsstatistik der Kontaktinformation, um Pflegeoperationen der Kontaktdatenbank (4, 24, 34) einem Benutzer (40) einer Terminalvorrichtung (6, 26, 50, 52, 54) basierend auf der Kontaktinformation und der Verwendungsstatistik anzubieten.

23. Kontaktdatenbank-Pflegesystem nach Anspruch 22, wobei die Datenbank (4) verbunden ist mit oder ein Namenswahlsystem (8) umfasst.

24. Kontaktdatenbank-Pflegesystem nach Anspruch 22 oder Anspruch 23, das Mittel zum Anzeigen einer übertragenen Nachricht in der Terminalvorrichtung (6, 26, 50, 52, 54) umfasst.

25. Kontaktdatenbank-Pflegesystem nach irgendeinem der Ansprüche 22 bis 24, das ferner ein Spracherkennungssystem (25) umfasst.

26. Kontaktdatenbank-Pflegesystem nach irgendeinem der Ansprüche 22 bis 25, das ferner Mittel zum Erzeugen einer Anrufsstatistik eines Benutzers (40) umfasst, die die Anzahl an Kontakten umfasst, die an eine spezifische Kontaktinformation in vorbestimmten Intervallen erfolgen.

27. Kontaktdatenbank-Pflegesystem nach irgendeinem der Ansprüche 22 bis 26, das ferner Mittel Zum Zufügen oder Entfernen einer spezifischen Kontaktinformation und betreffender Daten zu oder von einem Verzeichnis in der Datenbank (4, 34).

28. Kontaktdatenbank-Pflegesystem nach irgendeinem der Ansprüche 25 bis 27, wobei das Spracherkennungssystem (25) Sprecher-abhängig ist.

29. Kontaktdatenbank-Pflegesystem nach irgendeinem der Ansprüche 25 bis 27, wobei das Spracherkennungssystem (25) Sprecher-unabhängig ist.

30. Kontaktdatenbank-Pflegesystem nach irgendeinem der Ansprüche 22 bis 29, wobei Module des Systems zwischen der Terminalvorrichtung (6, 26, 50, 52, 54) und dem Netzwerk (2, 22, 32, 50, 52, 54) verteilt sein können.

31. Kontaktdatenbank-Pflegesystem nach irgendeinem der Ansprüche 25 bis 30, wobei die Mittel zur Sprachwahl zwischen der Terminalvorrichtung (6, 26, 50, 52, 54) und dem Server (28) verteilt sind.

## Revendications

1. Procédé pour maintenir une base de données de contact (4, 24, 34) comprenant les étapes consistant à :
déterminer les informations de contact qui sont utilisées pour établir une connexion ;
générer des statistiques d'usage desdites informations de contact ; **caractérisées par**
fournir lesdites statistiques d'usage desdites informations de contact pour offrir des opérations de maintenance de ladite base de données de contact (4, 24, 34) à un utilisateur (40) d'un dispositif
terminal (6, 26, 50, 52, 54) base sur lesdites informations de contact et lesdites statistiques d'usage.

2. Procédé selon la revendication 1 comprenant, en outre, l'étape consistant à maintenir automatiquement la base de données de contact (4, 24, 34) en conformité avec lesdites statistiques.

3. Procédé selon la revendication 1 ou 2, dans lequel l'étape consistant à offrir la maintenance comprend l'étape consistant à offrir l'ajout des données a ladite base de données de contact (4, 24, 34).

4. Procédé selon la revendication 1, 2 ou 3, dans lequel l'étape consistant à offrir les opérations de maintenance comprend l'étape consistant à offrir l'annulation de données de ladite base de données de contact (4, 24, 34).

5. Procédé selon l'une quelconque des revendications précédentes, dans lequel les informations de contact sont un numéro de téléphone.

6. Procédé selon l'une quelconque des revendications précédentes, dans lequel les informations de contact sont une adresse de courrier électronique ou une adresse Internet.

7. Procédé selon l'une quelconque des revendications précédentes, dans lequel les informations de contact sont un point d'accès d'application sans fil.

8. Procédé selon l'une quelconque des revendications précédentes, dans lequel les informations de contact contactées sont contactées par la numérotation d'un nom.

9. Procédé selon l'une quelconque des revendications précédentes, dans lequel les informations de contact contactées sont contactées par numérotation vocale.

10. Procédé selon l'une quelconque des revendications précédentes, dans lequel lesdites statistiques des informations de contact sont générées a des intervalles prédétermines.

11. Procédé selon l'une quelconque des revendications précédentes, dans lequel l'offre pour maintenir ladite base de données de contact (4, 24, 34) est transférée via un message.

12. Procédé selon l'une quelconque des revendications précédentes comprenant, en outre, l'étape consistant à exécuter ledit ordre de maintenance automatiquement.

13. Code de programme d'ordinateur qui amène un processeur à exécuter une opération de maintenance de base de données dans un réseau de communication (2, 22, 32, 50, 52, 54), comprenant un moyen de code de programme pour exécuter toutes les étapes selon l'une quelconque des revendications 1 à 12, dans lorsque ledit programme a été exécuté sur un ordinateur ou sur un dispositif terminal (6, 26, 52, 54) .

14. Produit de programme d'ordinateur comprenant un moyen de code de programme mémorisé sur un support lisible par ordinateur pour amener un processeur à exécuter le Procédé selon l'une quelconque des revendications 1 à 12, lorsque ledit produit de programme a été exécuté sur un ordinateur ou sur un dispositif terminal (6, 26, 52, 54).

15. Dispositif terminal (36) comprenant une
- base de données de contact (34)
- un moyen de déterminer les informations de contact qui sont utilisées pour établir une connexion,
- un moyen pour mémoriser les informations de contact utilisées ;
- un moyen pour générer des statistiques d'usage desdites informations de contact ;
**caractérisées par**
- un moyen pour fournir lesdites statistiques d'usage desdites informations de contact à un utilisateur (40) dudit dispositif terminal (36) ; et
un moyen pour offrir des opérations de maintenance de ladite base de données de contact (4, 24, 34) à un utilisateur (40) dudit dispositif terminal (36) sur la base desdites informations de contact et desdites statistiques d'usage.

16. Dispositif terminal (36) selon la revendication 15 comprenant, en outre, un moyen de reconnaissance vocale (35) .

17. Dispositif terminal (36) selon la revendication 15 ou 16, dans lequel ledit dispositif terminal (6, 26, 50, 52, 54) est un téléphone mobile.

18. Dispositif terminal (36) selon l'une quelconque des revendications 15 à 17, dans lequel le dispositif terminal (6, 26, 50, 52, 54) est connecte à, est incorpore dans ou comprend un dispositif d'ordinateur.

19. Serveur (28) pour maintenir une base de données de contact (24) dans un réseau (2, 22, 32, 50, 52, 54) comprenant un moyen pour
- déterminer les informations de contact qui sont utilisées pour établir une connexion ; et
- générer des statistiques d'usage desdites informations de contact ; **caractérisées par**
- fournir lesdites statistiques d'usage desdites informations de contact pour offrir les opérations de maintenance de ladite base de données de contact (4, 24, 34) à un utilisateur (40) d'un dispositif terminal (6, 26, 50, 52, 54) base sur lesdites informations de contact et lesdites statistiques d'usage.

20. Serveur (28) selon la revendication 19 comprenant, en outre, un moyen de reconnaissance vocale (25).

21. Serveur (28) selon la revendication 19 ou 20, dans lequel le serveur (28) comprend, en outre, un Système de numérotation de noms.

22. Système de maintenance de base de données de contact dans un réseau (2, 22, 32, 50, 52, 54), ayant au moins un dispositif terminal (6, 26, 50, 52, 54) et au moins un serveur (28), comprenant un moyen pour
- déterminer les informations de contact qui sont utilisées pour établir une connexion ; et
- générer des statistiques d'usage desdites informations de contact ; **caractérisées par**
- fournir lesdites statistiques d'usage desdites informations de contact pour offrir les opérations de maintenance de ladite base de données de contact (4, 24, 34) à un utilisateur (40) d'un dispositif terminal (6, 26, 50, 52, 54) base sur lesdites informations de contact et lesdites statistiques d'usage.

23. Système de maintenance de base de données de contact selon la revendication 22, dans lequel ladite base de données (4) est connectée à, ou comprend un Système de numérotation de noms (8).

24. Système de maintenance de base de données de contact selon la revendication 22 ou 23 comprenant un moyen pour afficher ledit message transféré dans ledit dispositif terminal (6, 26, 50, 52, 54).

25. Système de maintenance de base de données de contact selon l'une quelconque des revendications 22 a 24 comprenant, en outre, un Système de reconnaissance vocale (25) .

26. Système de maintenance de base de données de contact selon l'une quelconque des revendications 22 à 25 comprenant, en outre, un moyen pour générer des statistiques d'appel d'un utilisateur (40) comprenant le nombre de contacts effectues avec des informations de contact spécifiques à des intervalles prédétermines.

27. Système de maintenance de base de données de contact selon l'une quelconque des revendications 22 à 26 comprenant, en outre, un moyen pour ajouter ou annuler des informations de contact spécifiques et des données apparentées vers ou depuis ledit répertoire dans ladite base de données (4, 34).

28. Système de maintenance de base de données de contact selon l'une quelconque des revendications 22 à 27, dans lequel le Système de reconnaissance vocale (25) est dépendant du locuteur.

29. Système de maintenance de base de données de contact selon l'une quelconque des revendications 22 à 28, dans lequel le Système de reconnaissance vocale (25) est indépendant du locuteur.

30. Système de maintenance de base de données de contact selon l' une quelconque des revendications 22 à 29, dans lequel les modules du Système peuvent être distribues entre le dispositif terminal (6, 26, 50, 52, 54) et le réseau (2, 22, 32, 50, 52, 54).

31. Système de maintenance de base de données de contact selon l' une quelconque des revendications 22 à 30, dans lequel le moyen pour la numérotation vocale est distribue entre le dispositif terminal (6, 26, 50, 52, 54) et un serveur (28).
